# EUROPEAN PATENT APPLICATION

(11) **EP 1 314 521 A1**
(43) Date of publication of application: **28.05.2003**
(21) Application number: 01500274.4
(22) Date of filing: 22.11.2001
(51) Int. Cl.: B28B 11/24, F26B 5/04, C04B 33/30

(54) **Method and device for drying ceramic tiles**

(71) Applicant: Tecnicas de Vacio, S.L., 12200 Onda (Castellon) (ES)
(72) Inventor: Fernandez, Francisco Vigil, 12200 Onda (Castellon) (ES)
(74) Representative: Esteban Perez-Serrano, Maria Isabel

(57) **Abstract**

Method and device for drying ceramic tiles comprising a chamber (21) where the tiles are vacuum dried with a vacuum pump (22), aided by a refrigerating compressor (25) and two lyophilisation traps (23) meant to freeze the moisture extracted by the vacuum pumps (22). It provides a complete absorption of the moisture, a fully uniform dryness, allowing to control the humidity levels at all times and an increased production as the kiln preheating curve does not have to be lengthened, as well as a gas burner (15) placed at the inlet of the valve (14) for connection to the exterior allowing to bake the tiles without a prior drying stage.

## Description

### OBJECT OF THE INVENTION

The present invention relates to a method and device for vacuum-drying ceramic tiles in order to extract the water contained in them to provide either a 100% dryness or any other desired degree of humidity.

The invention is characterised by a special configuration of the tile drying device, which allows a complete extraction of the water contained in the tiles without any interruptions in the manufacturing process. This further allows to increase production and to obtain a uniform dryness as well as a uniform tile hardness, as the presence of water micro-cells in the tiles is prevented.

The machine is also characterised by an automated control of the entire drying process, so that a very high quality drying is obtained.

In addition to drying tiles, the machine and method of the invention allow to bake the tiles in the same machine after drying, without having to send them to a kiln.

Therefore, the present invention lies in the field of ceramic industry and more specifically in that of tile-drying processes.

### BACKGROUND OF THE INVENTION

Hitherto, the process employed in the ceramics industry for drying tiles in applications where their moisture must be eliminated (drying after pressing, drying on enamel lines between applications, pre-drying before entering the baking kiln) has been carried out using different machines (horizontal and vertical dryers, tunnel dryers, pre-drying of the tile accumulator before entering the kiln). However, in all of these the moisture is removed using gas burners, which heat air and thereby heat the tiles, causing the water in them to evaporate.

This drying process involving machines with gas burners has a number of drawbacks, such as an uneven drying which will result in uneven enamel hues, punctured enamel and further defects. In addition, as 100% of the water is not removed the tiles cannot enter the baking kiln with the kiln at the final baking temperature as the remaining moisture in the tiles would cause explosions in them as the water evaporates rapidly, and thus the kiln curve and preheating must be lengthened.

The object of the present invention is therefore to solve the aforementioned drawbacks, for which a tile drying method and machine is conceived that allows the tiles to enter the kiln with 0% moisture, thus preventing the lengthening of the kiln pre-heating curve and thereby increasing production. In addition gas consumption is reduced as it is not employed as the heat source for the drying process, and a uniform tile dryness is obtained.

### DESCRIPTION OF THE INVENTION

The invention disclosed relating to a tile drying method and device consists of a machine which dries the tiles extracting all their humidity, so that the final tile is harder, a uniform dryness is obtained which prevents uneven enamel hues and production is increased as the kiln does not require a preheating curve.

Said machine basically consists of a chamber in which the tiles are introduced, either by a tile accumulator which is introduced in said chamber so that all the tiles to be dried are introduced, or by an automated layered tile inlet.

After the tiles have been introduced in said chamber, the forward and rear areas of the chamber are closed by gates provided with pneumatic or hydraulic pistons. After this the purge valves are closed, so that only the lyophilisation trap inlet and outlet valves remain open.

The inside of the chamber contains UV or IR lamps, so that when the tiles are placed in a vacuum their heat loss is not beneath the steam tension point, causing the water to freeze so that the water inside the tiles can be extracted.

The lyophilisation traps are meant to trap absorbed water by freezing it, for which they are provided with an internal refrigeration gas coil controlled by a refrigerating compressor and a temperature probe. The temperature in the trap is kept below the steam tension point at the pressure determined by the vacuum pump.

The size of the lyophilisation trap is such that it can contain the amount of water required by the process at all times and the number of corresponding cycles, so that the water is trapped before it can reach the vacuum pump and damage it. If there were no such trap, several pumps would be required to evacuate the large volume of water in gas phase.

Two parallel lyophilisation traps are required, so that when one is full of frozen water the other is ready to start production; thus, while one is operating the other is thawing.

Thawing of the lyophilisation traps proceeds as follows: firstly, any refrigeration gas inside it is recovered and introduced in the refrigeration compressor; then the trap is heated by a flat resistor wrapped around it, thawing the frozen water; the purge valves are then opened and the water drained through them and through the pipes. In order to prevent ambient temperature from affecting the inside of the trap these are provided with an outer insulation layer.

Additionally, in order to thaw the lyophilisation traps the refrigeration gas is sent in liquid phase through the coil, giving it a temperature sufficient to thaw the ice.

After this process concludes the trap inlet and outlet valves are closed and the valve connecting the chamber to the outside is opened, allowing air to circulate in the valve after passing through a filter to prevent moisture from entering, which the tiles could absorb. A gas heater may be provided at the inlet of this valve connecting the chamber to the outside, so that the tiles may be set at the desired temperature at all times, depending on the production position where the dryer is placed.

After the chamber pressure is equalled to atmospheric pressure the vacuum sensor reading is recorded and the pneumatic or hydraulic pistons are actuated, opening the gates and freeing the tile accumulator, or proceeding to discharge in the opposite sense to the loading direction.

All chamber junctions are provided with a flange and welding unit, that is, a vacuum standard flange welded on one end to the chamber or to a pipe or flange.

### DESCRIPTION OF THE DRAWINGS

The characteristics of the present invention will be understood more clearly in view of the accompanying drawings where for purposes of illustration only and in a non-limiting manner the main characteristics of the invention are shown.

Figure 1 shows a perspective view of the tile drying machine where tiles are loaded using an accumulator, so that loading is simultaneous.

Figure 2 shows an enlarged view of the inside of the lyophilisation traps meant to retain the water of the absorbed air.

Figure 3 shows the machine of figure 1 with a tile loading process which employs a belts and roller table system, with the tiles set on the inner rods of the chamber.

### PREFERRED EMBODIMENT OF THE INVENTION

A preferred embodiment of the invention is now described, with reference to the above figures.

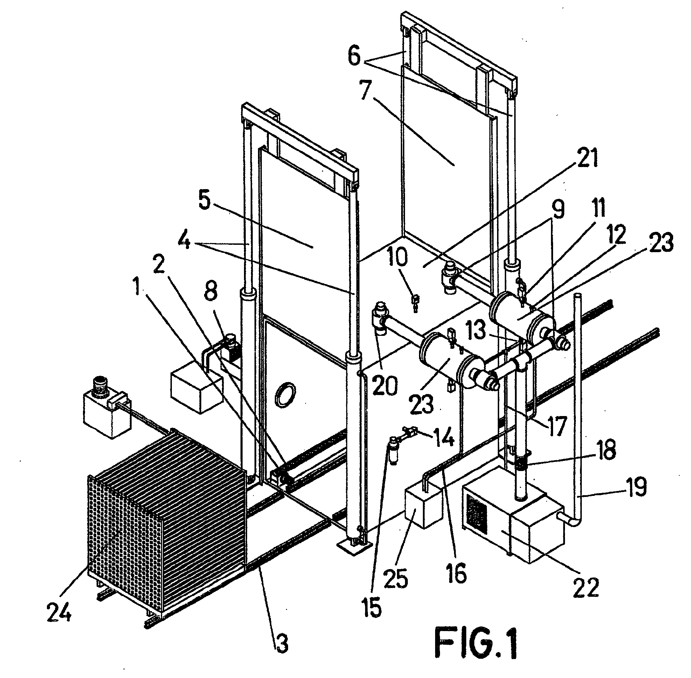

Figure 1 shows the tile dryer provided with a chamber (22) where tiles are dried and in this case are introduced with a tile accumulator (24) by means of a system of guides (3) on which the accumulator is sent towards the interior of the chamber by means of a traction motor (1) and a set of gears (2).

Once the tile accumulator (24) has been introduced in it the chamber (21) is closed by pneumatic or hydraulic pistons (4 and 6) which close gates (5 and 7).

Inside the chamber (21) are provided a set of UV or IR lamps (8) meant to prevent freezing of the tiles, so that the tiles do not lose heat and pass the steam tension point, causing the water to freeze.

The absorption chamber is provided with a vacuum level gauge (10). Two lyophilisation traps (23) are connected to the chamber (21), which are meant to retain the moisture in the extracted air for which valves (9) are provided at the inlet and outlet of said traps (23). These valves are first opened, with the purge valves (13 and 11) closed.

The lyophilisation traps are provided with a temperature probe (12), so that the temperature of the trap (23) is beneath the steam tension point for the pressure determined by the vacuum pump (22).

The lyophilisation traps (23) are connected to the refrigerating compressor (25) through the pipes (16), which allow the refrigeration gas to re-circulate.

After all the moisture in the tiles has been extracted the valves (9) are closed and the valve (14) opened, which connects the chamber to the outside through a gas burner (15). The latter places the tiles at the desired temperature, so that their enamelling is facilitated without requiring a drying stage.

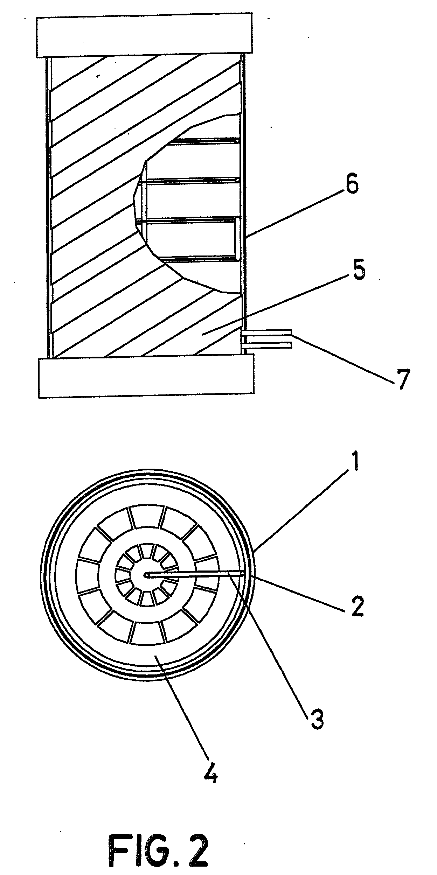

Figure 2 shows the internal structure of the lyophilisation traps (23), which are provided with an inner coil (23.1) through which the refrigeration gas is sent. Externally a flat resistance (23.2) is provided to heat the interior when the trap stops operating, with the parallel trap (23) entering. An insulator (23.3) is provided to insulate the unit from the ambient temperature. Also shown is the drain pipe (17).

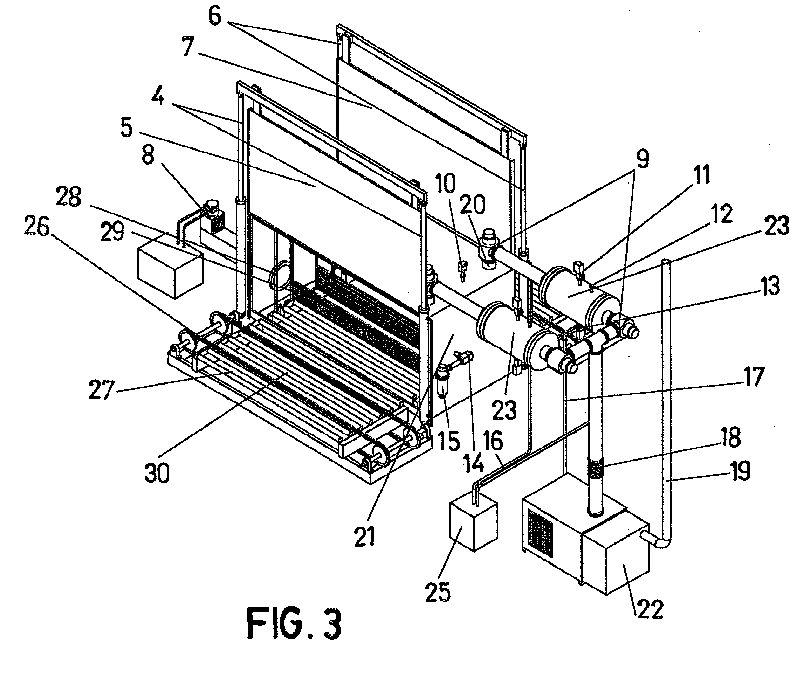

Figure 3 shows the same machine with a modified loading method. Here a set of belts (26) is provided, along which the tiles are transported. These belts may move up and down, so that after reaching the roller table (30), which is provided with rollers (27), the rollers are responsible for the subsequent advance of the tiles into the chamber (21). Chains (28) are provided on the interior of both sides, so that between two opposing chains there are rods (29) on which the tiles are placed. Initially he rods (29) are uniform with the rollers (27), so that when a row of tiles is on the rods these rods (29) are raised on step and another level is loaded.

This description is not continued in the understanding that it should allow any expert in the field to understand the scope of the invention and the advantage thereof.

The materials, size, shape and arrangement of the components may vary as long as the essence of the invention is unaltered.

The terms used in this description should be understood in a non-limiting sense.

## Claims

1. Drying method for ceramic tiles, **characterised in that** all their moisture is extracted so that the tiles are left with 0% moisture, a uniform dryness is obtained, the moisture level obtained at each manufacturing stage can be controlled, the tile hardness is increased as there are no water micro-cells left in the tiles and production is increased if the tiles must later be sent to a kiln, as the kiln pre-heating curve is not required. The method firstly involves loading of the tiles by either a tile accumulator (24) which allows the simultaneous loading of all the tiles, or by an automated system. Once the tiles have been introduced in the chamber (21) this chamber is closed by pistons (4 and 6) and gates (5 and 7). After this the valves (9) are opened and the valves (11 and 13) are closed. The vacuum pump extracts the inner moisture, which is retained by the lyophilisation trap (23). Once all moisture has been extracted from the tiles the valves (9) are closed and the valve (14) which provides communication to the exterior is opened. This latter valve is connected to a gas burner, so that the tiles can be heated to a temperature better suited for the enamelling process or any other process involved, without requiring a prior drying stage. Once the interior is dry the gates (5 and 7) are opened by the pistons (4 and 6) and the tiles are extracted.

2. Drying machine for ceramic tiles, **characterised in that** drying process can involve two lyophilisation traps (23), such that when one trap (23) is full the other can enter production while the first trap thaws; it is not necessary to wait for the first trap to thaw as it can be heated with a flat resistance (23.2), or it can be thawed by introducing the refrigerating gas in liquid phase; the resulting water is drained through the valve (13) and the pipe (17).

3. Drying machine for ceramic tiles, **characterised in that** it comprises a chamber (21) in which the tiles are introduced either simultaneously by a tile loader (24) or automatically . When the tiles are simultaneously loaded by a tile loader (24), said chamber is provided with a traction motor (1), gears (2) and a system of guides (3), as well as a set of pistons (4 and 6) and gates (5 and 7). Inside it is provided with UV or IR lamps (8) meant to prevent the tile moisture from freezing. The chamber is provided with a vacuum level gauge (10) and with two lyophilisation traps (23) arranged in parallel, with valves (9) at their inlet and outlet and valves (11 and 13) for draining through pipes (17). The vacuum pump (22) expels air through the pipe (19) and is provided with a flexible hose (18) meant to absorb vibrations, so that these are not transmitted to the rest of the unit. Above the chamber (21) is placed a valve (14) for connection with the exterior, which is connected to a gas burner (15) that allows to heat the tiles to a temperature which facilitates the adhesion of the enamel, without requiring a prior drying stage.

4. Drying machine for ceramic tiles, as claimed in claim 3, **characterised in that** the gas burner (15) can be replaced by a Perlite trap which will ensure that the after the vacuum is obtained and air is allowed to enter the chamber this air will be full of moisture.

5. Drying machine for ceramic tiles, as claimed in claim 3, **characterised in that** the lyophilisation traps (23) receive the cooling liquid through pipes (16), from a refrigerating compressor (25), and **in that** said lyophilisation traps are provided with an internal coil (23.1) with a flat resistance (23.2) meant to heat said traps when they are thawed, and with an insulation layer (23.3) surrounding the entire unit in order to prevent the influence of ambient temperature. Likewise, said lyophilisation traps can be thawed by introducing the refrigeration gas in them in liquid state through the coil.

6. Drying machine for ceramic tiles, as claimed in claim 3, **characterised in that** when the tiles are fed automatically and not simultaneously, a system of belts (26) is provided which carries the tiles to a roller table (30), so that at this table and since the belts (26) may move up and down the tiles are placed on the rollers (27) of said table. The rollers carry the tiles to a grid formed by a chain (28) and transverse rods (29), so that the rods (29) are first aligned with the rollers (27) and when a row has been loaded the rods (29) will rise one step under the action of the chain (28), and so on successively.

7. Drying machine for ceramic tiles, as claimed in claim 3, **characterised in that** the pistons (4 and 6) used may be either hydraulic or pneumatic.

8. Drying machine for ceramic tiles, as claimed in claim 3, **characterised in that** all chamber unions will be provided with a weld and flange assembly, so that it will consist of a vacuum standard flange welded on one end to the chamber or to a pipe or flange.
